(19) **Europäisches Patentamt European Patent Office Office européen des brevets**

(11) **EP 2 070 211 B1**

(12) **FASCICULE DE BREVET EUROPEEN**

(45) Date de publication et mention
de la délivrance du brevet:
**10.11.2010 Bulletin 2010/45**

(51) Int Cl.:
***H04W 52/04*** (2009.01)

(21) Numéro de dépôt: **07823776.5**

(86) Numéro de dépôt international:
**PCT/FR2007/051879**

(22) Date de dépôt: **06.09.2007**

(87) Numéro de publication internationale:
**WO 2008/029061 (13.03.2008 Gazette 2008/11)**

(54) **PROCEDE D'EMISSION A ETALEMENT AVEC ALLOCATION DE PUISSANCE PAR UTILISATEUR ET PAR SYMBOLE**

VERFAHREN ZUR SPREIZÜBERTRAGUNG MIT LEISTUNGSZUWEISUNG PRO BENUTZER UND PRO SYMBOL

METHOD OF SPREAD TRANSMISSION WITH ALLOCATION OF POWER PER USER AND PER SYMBOL

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **06.09.2006 FR 0653595**

(43) Date de publication de la demande:
**17.06.2009 Bulletin 2009/25**

(73) Titulaire: **FRANCE TELECOM**
**75015 Paris (FR)**

(72) Inventeur: **BOCQUET, Wladimir**
**Tokyo 135-0022 (JP)**

(74) Mandataire: **Jeune, Pascale**
**R&D/PIV/Brevets**
**38/40 Rue du General Leclerc**
**92794 Issy Moulineaux Cedex 9 (FR)**

(56) Documents cités:
**WO-A-2006/068565     US-A- 6 137 841**
**US-A1- 2005 032 514**

**Description**

La présente invention se rapporte de manière générale aux communications dites numériques, qui font partie du domaine des télécommunications. Les communications numériques comprennent en particulier les communications sans fil dont le canal de transmission est le canal aérien ainsi que les communications filaires. Au sein de ce domaine, l'invention se rapporte aux procédés d'émission et plus particulièrement aux techniques de transmission à étalement selon deux dimensions pour des systèmes multi porteuses. L'étalement selon chacune des dimensions est obtenu par duplication pondérée au moyen d'un code d'étalement qui permet de superposer des échantillons concernant des utilisateurs différents. Ces techniques comprennent en particulier les techniques du type OFCDM (acronyme anglais de Orthogonal Frequency Code Division Multiplexed) autrement connues sous l'acronyme MC-CDMA(acronyme anglais de Multi carriers-Code Division Multiple Access), avec un étalement dans les domaines temporel et fréquentiel.

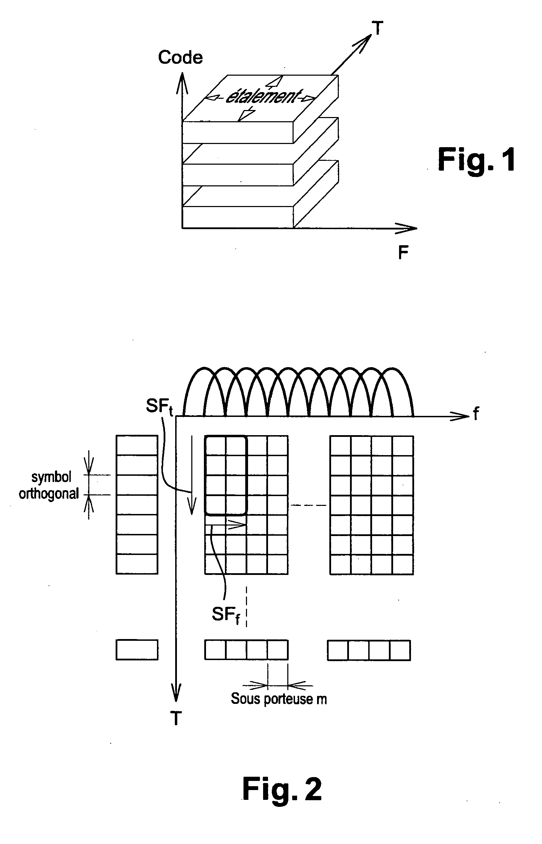

Une caractéristique essentielle des techniques de transmission de type MC-CDMA est de compenser la perte de débit introduite par la duplication des symboles par une augmentation de débit obtenue par l'empilage de plusieurs symboles de différents utilisateurs sur le même intervalle temporel ou la même fréquence porteuse. La figure 1 est une illustration de cet effet d'empilement sur les axes temporel et fréquentiel de symboles de différents utilisateurs obtenu au moyen de l'étalement dans les domaines temporel et fréquentiel. Par ailleurs, une caractéristique commune aux techniques multi porteuses est de réduire le débit au niveau de chaque sous porteuse tout en fournissant un débit de transmission bits élevé en utilisant simultanément ces sous porteuses. La bande de fréquence est divisée en petites plages attribuées chacune respectivement aux différentes sous porteuses. Les sous porteuses sont orthogonales entre elles. Cette propriété est obtenue par un espacement entre sous porteuses multiple de l'inverse de la durée symbole. Un système à modulation multi porteuses peut permettre de fournir une immunité contre un évanouissement sélectif en fréquence intervenant lors de la transmission par le canal du fait que toutes les sous porteuses ne sont pas soumises simultanément à cet évanouissement. Toutefois, pour lutter contre ce phénomène d'évanouissement, le canal de transmission doit malgré tout être estimé et corrigé pour chaque sous porteuse lors de la réception du signal transmis.

Un émetteur MC-CDMA effectue plusieurs traitements sur les données binaires d'entrée haut débit pour générer un signal dit MC-CDMA qui est transmis par le canal. Ainsi, les données binaires haut débit sont codées, par exemple avec un code convolutionnel, et modulées, par exemple par une modulation de type xPSK ou xQAM, le codage et la modulation pouvant être différents entre utilisateurs. Les données modulées sont ensuite converties sous forme parallèle en plusieurs flux de données modulées bas débit. L'étalement temporel est obtenu d'une part par la duplication de chaque donnée modulée bas débit, dit symbole, pour obtenir $SF_t$ symboles à partir d'une donnée modulée bas débit, la multiplication de chaque symbole par un élément (chip en langage anglosaxon) du code à étalement temporel et d'autre part une mise en parallèle dans le domaine temporel de ces différents symboles pondérés pour qu'ils soient typiquement modulés par une sous porteuse dans des symboles MC-CDMA différents. La figure 2 donne une illustration dans le plan temps fréquence de l'étalement. Chaque flux initial est donc dupliqué pour donner $SF_t$ flux de symboles issus de l'étalement en temps. Selon l'illustration, les symboles étalés en temps sont répartis respectivement sur des symboles orthogonaux successifs et différents. L'étalement dans le domaine fréquentiel est obtenu en dupliquant plusieurs fois chaque symbole issu de l'étalement temporel pour obtenir en tout $SF_f$ symboles, en multipliant respectivement chacun de ces $SF_f$ symboles par un élément (chip en langage anglosaxon) du code à étalement fréquentiel et en les répartissant sur $SF_f$ sous porteuses d'un modulateur orthogonal. Ce modulateur génère des symboles orthogonaux dits MC-CDMA. Après étalement temporel et fréquentiel, chaque symbole étalé qui module la sous porteuse p, avec p=0, 1,...Nc-1 et Nc le nombre de sous porteuses, peut s'écrire sous la forme condensée suivante :

$$x_{p,n}^{(k)} = d_{\lfloor p/SFf \rfloor, \lfloor n/SFt \rfloor}^{(k)} \times c_{(p \bmod SFf),(n \bmod SFt)}^{(k)} \qquad (1)$$

avec,

$d_{mj}$ (m=0,1,....,Nc/SF$_f$-1 ; j=0,1,...,Nd/SF$_t$-1) les données modulées ou symboles,
$c_{iq}$ (i=0,1....,SF$_f$-1, q=0,1,...,SF$_t$-1) la séquence de codes à deux dimensions,
$\lfloor z \rfloor$ la valeur du plus grand entier inférieur ou égal à z, c'est-à-dire la partie entière de z,
k l'indice d'utilisateur et,
n l'indice de symbole MC-CDMA, n=0,1,...Nd-1, Nd le nombre de symboles MC-CDMA dans une trame.

Le facteur d'étalement SF s'exprime sous la forme $SF = SF_t \times SF_f$ avec $SF_t$ et $SF_f$ les valeurs d'étalement respectivement dans le domaine temporel et dans le domaine fréquentiel. Le nombre de données d'entrée modulées dans une trame est donné par la relation :

$$\left( Nc \times Nd \right) / \left( SF_t \times SF_f \right).$$

Un multiplexeur effectue le multiplexage des symboles étalés appartenant à différents utilisateurs pour un symbole MC-CDMA n et pour une porteuse p donnés. Cette fonction de multiplexage peut se traduire par la relation :

$$x_{p,n} = \sum_{k=0}^{N_u-1} x_{p,n}^{(k)} \tag{2}$$

Le multiplexeur positionne les symboles $x_{p,n}$ en entrée du modulateur à transformée de Fourier inverse (IDFT) en regard de la sous porteuse correspondant à leur indice p.

Les symboles $x_{p,n}$ sont convertis en symbole orthogonaux MC-CDMA au moyen d'une division fréquentielle obtenue par une transformée de Fourier discrète inverse à Nfft points (IDFT). La durée d'un symbole MC-CDMA est donc égale à :

$$Td = N\!fft \times T\!fft$$

avec Tfft l'inverse de l'écart inter-porteuses.

Les symboles orthogonaux MC-CDMA résultants sont convertis sous forme analogique par un convertisseur numérique/analogique pour générer un signal MC-CDMA et converti par un convertisseur de fréquence (U/C) vers une bande radio fréquence (RF) pour émission vers le canal de transmission.

Typiquement, un système MC-CDMA transmet $N_{FFT}$ symboles $X_{p,n}$ pendant la n-ième période symbole orthogonal MC-CDMA sur Nfft sous canaux déterminés par des sous porteuses espacées de $\Delta F = 1/T\!fft$.

Pour combattre l'interférence inter symboles (ou ISI acronyme anglais de Inter Symbol Interférence) et l'interférence entre porteuses (ou ICI acronyme anglais de Inter Carrier Interference), un intervalle de garde (Guard Interval (GI)) tel qu'un préfixe cyclique (Cyclic Prefix (CP)) ou Zero Padding (ZP)) de Ng points est ajouté à chaque symbole orthogonal MC-CDMA. Cet intervalle de garde permet de ne pas avoir de recouvrement entre symboles orthogonaux MC-CDMA quand le retard de transmission est inférieur à la durée de cet intervalle. La durée totale Tg de l'intervalle de garde est égale à $Tg = Ng \times T\!fft$ avec Tfft la durée d'un échantillon de la FFT, sachant que la durée d'un symbole orthogonal MC-CDMA est égale à $Td = N\!fft \times T\!fft$. Le signal MC-CDMA s'exprime alors sous la forme :

$$s^{(k)}(t) = \frac{1}{\sqrt{N\!fft}} \times \sum_{n=0}^{Nd-1} \sum_{p=0}^{N\!fft-1} x^{(k)}{}_{p,n} \times e^{j2\pi p(t-n(N\!fft+Ng))/N\!fft} \times u(t - n(Td + Tg)) \tag{3}$$

expression dans laquelle le terme u(t) est la fonction porte définie sur l'intervalle [0, Td+Tg] et $x_{p,n}$ est la composante relative à l'utilisateur k du signal transmis qui module la $p^{\text{ième}}$ sous porteuse du nième symbole MC-CDMA.

En prenant comme hypothèse que le canal de transmission se compose de P trajets discrets caractérisés chacun par une amplitude et un retard alors la réponse impulsionnelle en bande de base du canal, pour l'utilisateur k, peut s'exprimer sous la forme :

$$h^{(k)}(t,\tau) = \sum_{p=0}^{P-1} \alpha_p^{(k)}(t).\delta(\tau - \tau_p) \tag{4}$$

avec $\alpha_p$ et $\tau_p$ respectivement le gain complexe de canal et le retard du $p^{\text{ième}}$ trajets dit délai d'étalement (delay spread). La puissance totale transmise par le canal sur les différentes sous-porteuses est normalisée à 1. En outre, il est considéré que $\tau_{max}=\max \tau_j < (Td+Tg)=$durée d'un symbole MC-CDMA. Cette relation est vérifiée en adaptant la durée de l'intervalle de garde aux caractéristiques du canal de transmission.

Le canal est supposé modélisé par un filtre de réponse impulsionelle finie (FIR) d'ordre L-1 avec L le nombre d'échantillons temporels correspondant au retard $\tau_p$ maximum. La fonction de transfert $H^{(k)}(t,f)$ du canal, pour l'utilisateur k, peut s'exprimer dans le domaine fréquentiel sous la forme :

$$H^{(k)}(t,f) = \sum_{p=0}^{P-1} \alpha_p^{(k)}(t).\exp\left(-j2\pi f \tau_p\right) \tag{5}$$

Les coefficients $\alpha_p^{(k)}$ de la réponse impulsionnelle sont estimés selon des méthodes connues qui reposent sur l'exploitation de symboles pilotes.

A la réception, le signal reçu par un récepteur est filtré par un filtre passe bande (BPF) et converti en bande de base (D/C). Le signal est échantillonné par un convertisseur analogique/numérique (A/D). Après suppression de l'intervalle de garde, les données échantillonnées alimentent une transformée de Fourier discrète (DFT) à Nfft points et sont démultiplexées en autant de branches que de sous porteuses.

Après démultiplexage, la composante qui module la p$^{ième}$ sous porteuse du n$^{ième}$ symbole OFCDM reçu s'exprime sous la forme :

$$y_{n,p} = \frac{1}{\sqrt{Nfft}} \cdot \sum_{i=0}^{Nfft-1} r_{n,i}.e^{-j2\pi pi/Nfft} \tag{6}$$

Quand le maximum des retards $\tau_p$ (delay spread) est inférieur à l'intervalle de garde, la composante qui module la p$^{ième}$ sous porteuse du n$^{ième}$ symbole OFCDM reçu peut s'exprimer sous la forme :

$$y_{p,n}^{(k)} = h_p^{(k)} \times x_{p.n}^{(k)} + n_{p,n}^{(k)} \tag{7}$$

Pour réduire les effets de distorsion du canal, qui peuvent entraîner la perte d'orthogonalité entre les différents utilisateurs, il est connu de compenser le canal dans le domaine fréquentiel sous-porteuse par sous porteuse, en utilisant des coefficients déterminés $G_p^{(k)}$ selon en particulier un critère d'erreur quadratique minimale (MMSE), un critère de combinaison de gain (EGC) ou un critère d'égalisation à zéro (ZF). Ensuite, pour chaque branche les données sont desétalées, démodulées et décodées. Cette compensation revient à multiplier le signal reçu par l'inverse du gain de canal, pour une sous-porteuse donnée. Cette compensation peut être effectuée par utilisateur en prenant en compte les coefficients du canal donnés par la relation (8) :

$$G_p^{(k)} = \begin{cases} \dfrac{\hat{H}_p^{(k)*}}{\left|\hat{H}_p^{(k)}\right|^2} & (ZF) \\[3ex] \dfrac{\hat{H}_p^{(k)*}}{\left|\hat{H}_p^{(k)}\right|} & (EGC) \\[3ex] \dfrac{\hat{H}_p^{(k)*}}{Nu.\left|\hat{H}_p^{(k)}\right|^2 + \sigma_n^2} & (MMSE) \end{cases} \tag{8}$$

Cette méthode a pour inconvénient d'augmenter le niveau de bruit à la réception en particulier quand la valeur du gain du canal est faible, cette configuration se rencontrant typiquement en cas d'évanouissement.

Ainsi, l'invention propose un procédé d'émission multi porteuses pour un système à au moins une antenne d'émission et au moins une antenne de réception séparées par un canal de transmission, de symboles orthogonaux issus d'un module de modulation par Nfft fonctions orthogonales déterminant Nfft sous porteuses sur lesquelles sont modulés des symboles représentatifs de données d'information d'entrée regroupées par trame et associées à Nu utilisateurs, qui permette de lutter contre les phénomènes d'évanouissement tout en limitant l'augmentation du niveau du bruit sur le signal reçu.

Le procédé proposé est du type à étalement des symboles avant modulation orthogonale selon deux dimensions au moyen d'un code d'étalement, le nombre d'éléments constitutif du code déterminant le nombre maximum d'utilisateurs Numax, le nombre d'utilisateurs Nu étant déterminé inférieur ou égal à ce maximum. Le procédé est remarquable en ce qu'il détermine un jeu de puissances $pe_m^{(k)}$ émises par une antenne par symbole m relatif à un utilisateur k, constantes sur la durée d'une trame, dont la répartition entre utilisateurs minimise un critère d'erreur globale sous contrainte que la somme des puissances $pe_m^{(k)}$ du jeu soit égale au produit du nombre d'utilisateurs Nu et de la puissance émise par l'antenne d'émission par symbole en moyenne sur les utilisateurs, le signal émis par l'antenne d'émission étant émis avec les puissances $pe_m^{(k)}$ déterminées par symbole m et par utilisateur k, $k = 1,...,Nu$ .

En recherchant un jeu de puissances émises qui permette de minimiser un critère d'erreur globale par symbole, typiquement un taux d'erreur bit globale, BER, un procédé selon l'invention prend en compte les conditions de propagation pour ajuster la puissance émise entre utilisateurs et permet par conséquent une distribution optimale de la puissance totale émise qui permet d'améliorer la lutte contre les phénomènes d'évanouissement qui sont spécifiques à un utilisateur. Un tel procédé améliore l'efficacité globale du système.

Le critère d'erreur globale qui est typiquement un BER (acronyme anglais de Bit Error Rate) peut tout aussi bien être un PER (acronyme anglais de Packet Error Rate) qui est un critère de mesure d'erreur couramment employé dans les systèmes mettant en oeuvre un codage de canal reposant par exemple sur un code convolutionnel, un turbo code ou un code LDPC. Dans ces systèmes dits codés, les deux critères d'erreur globale, BER et PER peuvent être utilisés.

Selon une réalisation particulière, la contrainte tient compte d'un niveau de priorité entre utilisateurs qui vient pondérer chaque puissance $pe_m^{(k)}$ intervenant dans la somme. Ceci est particulièrement avantageux pour combattre en particulier les effets négatifs d'un équipement de réception défectueux qui nécessite un niveau élevé de puissance quel que soit l'environnement dans lequel il fonctionne. Un autre avantage de ce mode est de pouvoir privilégier un utilisateur sur le plan du niveau de puissance attribuée par rapport à d'autres utilisateurs dont les communications sont transmises par le même émetteur.

D'autres caractéristiques et avantages de l'invention apparaîtront lors de la description qui suit faite en regard de figures annexées données à titre d'exemples non limitatifs.

La figure 1 est une illustration de l'effet d'empilement sur les axes temporel et fréquentiel des symboles de différents utilisateurs obtenu au moyen du processus d'étalement dans les domaines temporel et fréquentiel.

La figure 2 est une illustration du processus d'étalement temps fréquence.

La figure 3 est un organigramme d'un procédé selon l'invention.

La figure 4 est un organigramme d'un premier mode de réalisation d'un procédé selon l'invention.

La figure 5 est un organigramme d'un deuxième mode de réalisation d'un procédé selon l'invention.

La figure 6 est un schéma bloc d'un émetteur selon l'invention mettant en oeuvre un mode particulier de réalisation du procédé selon l'invention.

La figure 7 est un schéma d'un système SY de transmission selon l'invention.

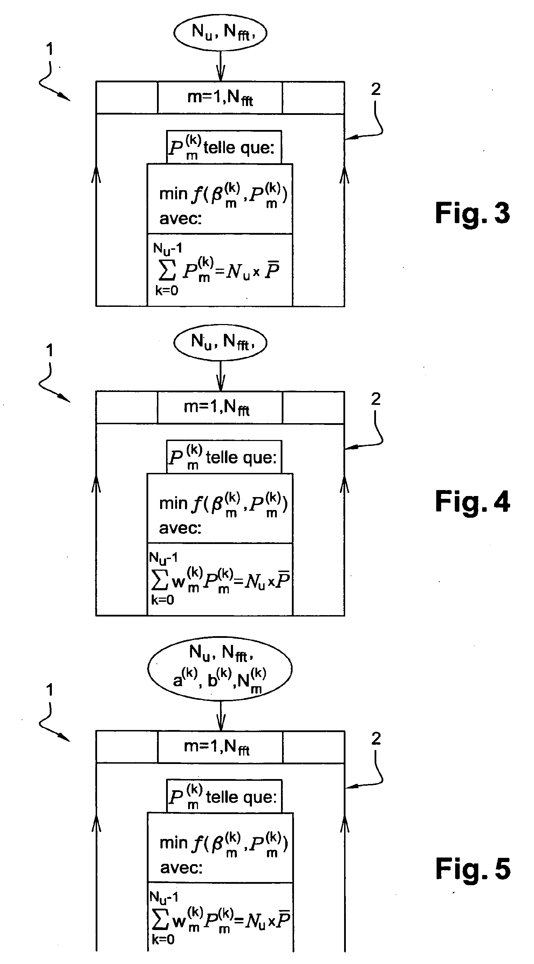

La figure 3 est un organigramme d'un procédé d'émission multi porteuses selon l'invention. Le procédé 1 a pour données d'entrée des données d'information regroupées par trame et correspondant à Nu utilisateurs, $Nu \geq 1$. Typiquement, ces données correspondent à des signaux échangés entre des terminaux, par exemple des terminaux de téléphonie fixe côté émetteur et mobile côté récepteur. Plus généralement, le procédé intervient dans toute télécommunication empruntant un canal de transmission avec une adaptation de puissance en entrée du canal. Le procédé est décrit ci-après pour un système SISO avec une modulation MC-CDMA, c'est-à-dire avec une antenne d'émission, Nt=1, et une antenne de réception, Nr=1.

Un procédé d'émission multi porteuses de symboles orthogonaux typiquement MC-CDMA comprend généralement différentes étapes de traitement bien connues, tel en particulier un codage de canal, un entrelacement, un codage binaire à symbole basé sur une modulation par exemple de type xQAM ou xPSK. Ces étapes bien connues ne sont pas décrites.

Le procédé d'émission multi porteuses est du type à étalement de symboles avant modulation orthogonale. Ces symboles sont représentatifs des données d'information d'entrée et sont issus typiquement d'une étape de codage binaire à symbole. L'étalement est effectué de façon connue selon deux dimensions au moyen d'un code d'étalement. Le nombre SF d'éléments constitutifs du code détermine le nombre maximum d'utilisateurs Nu pouvant être étalés, $Nu \leq SF.$ Les deux dimensions correspondent typiquement au temps et à la fréquence. Le code se décompose en un code d'étalement en temps comprenant $SF_t$ éléments (chip en langage anglosaxon) et un code d'étalement en fréquence comprenant $SF_f$ éléments (chip en langage anglosaxon). Les symboles après étalement peuvent être exprimés par la relation (1).

L'étalement des symboles est effectué de manière combinée avec une modulation orthogonale. La modulation orthogonale forme des symboles orthogonaux d'indice temporel appelé temps symbole orthogonal. Cette modulation orthogonale est typiquement une modulation OFDM. Les symboles pondérés par un élément du code à étalement sont modulés par les différentes sous porteuses. Le procédé émet au moyen de l'antenne d'émission un signal de sortie sur Nfft sous-porteuses qui est transmis par le canal, le signal émis peut s'exprimer sous la forme donnée par l'équation (3).

Le signal émis par l'antenne d'émission est émis avec une puissance $pe_m^{(k)}$ déterminée par symbole m et par utilisateur $k = 1,...,Nu$. Chaque puissance $pe_m^{(k)}$ est constante sur la durée d'une trame et peut varier entre trames.

Le procédé comprend une étape 2 de détermination par symbole m d'un jeu de puissances $pe_m^{(k)}$ constantes sur la durée d'une trame dont la répartition entre utilisateurs k minimise un critère d'erreur globale. La minimisation du critère d'erreur globale est sous contrainte que la somme des puissances $pe_m^{(k)}$ du jeu soit égale au produit du nombre d'utilisateurs Nu et de la puissance émise par symbole en moyenne sur les différents utilisateur..

Dans un système MC-CDMA (VSF-OFCDM selon la désignation anglo-saxonne), il n'y a pas ou peu de corrélation entre les canaux pour les différents utilisateurs. Sur la durée d'une trame et pour un utilisateur, le canal est considéré à évanouissement plat : le calcul de puissance est effectué par trame. Le critère d'erreur globale est choisi typiquement comme étant le taux d'erreur bit globale, BER (Bit Error Rate). Par définition le BER est fonction du rapport signal sur bruit SNR (Signal to Noise Ratio), c'est-à-dire des conditions de transmission du canal et de la puissance émise pe par l'antenne d'émission. La relation entre le BER et le SNR peut être exprimée sous la forme $f(\beta, pe)$, avec f une fonction exacte, ou estimée, de la relation existante entre le BER et les conditions de transmission du canal. Dans un canal avec évanouissement plat, ce taux peut être décliné pour chaque symbole m :

$$BER_m^{(k)} = f\left(\beta_m^{(k)}, pe_m^{(k)}\right) \qquad (9)$$

et sous la forme approchée :

$$BER_m^{(k)} \approx a.\exp\left(-b.\beta_m^{(k)}.pe_m^{(k)}\right) \qquad (10)$$

avec :

$$\beta_m^{(k)} = \frac{SF_f}{\left(2^{N_u} - 1\right)\sigma_n^2 \times \displaystyle\sum_{q=0}^{SF_f-1} \left|G_{q+SF_f \times m}^{(k)}\right|^2} \qquad (11)$$

$$m=0, 1,...,Nc/SF_f-1$$

$N_m$ le nombre de bits par symbole $d_{m,n}^{(k)}$, déterminé par le type de modulation intervenant dans le codage binaire à symbole,

$G_i^j$ est la valeur de compensation de canal obtenue par la relation (8),
et a=0.2 et b=1.5 des coefficients heuristics.
σ représente la variance du bruit blanc Gaussien

Le taux d'erreur bit globale BER est minimal quand il est minimisé pour chaque utilisateur et pour chaque sous-bande fréquentielle correspondant à une sous-porteuse. Pour déterminer la valeur minimale une solution consiste à utiliser un algorithme à Lagrangien.

La minimisation peut s'exprimer de la manière suivante :

$$\min \; f\left(\beta_m^{(k)}, pe_m^{(k)}\right) \qquad\qquad (12)$$

$$\text{avec} \; \sum_{k=0}^{Nu-1} pe_m^{(k)} = Nu \times \overline{P} \qquad\qquad (13)$$

Les équations (12) et (13) sont une traduction du fait que le procédé minimise le taux d'erreur bit globale BER en déterminant le meilleur jeu de puissances émises pour les différents utilisateurs pour un symbole m sous la contrainte que la puissance émise totale doit être constante et fixée. La puissance émise totale est égale à la puissance émise par symbole m en moyenne entre les utilisateurs multipliée par le nombre d'utilisateurs.

La résolution des équations (12) et (13) peut être effectuée en mettant en oeuvre un algorithme à Lagrangien. Pour chaque sous-porteuse, le Lagrangien peut s'exprimer sous la forme :

$$J\left(pe_m^{(0)},\dots, pe_m^{(Nu-1)}\right) = \frac{1}{Nu}\sum_{k=0}^{Nu-1} f\left(\beta_m^{(k)}, pe_m^{(k)}\right) + \lambda\left(\sum_{k=0}^{Nu-1} pe_m^{(k)} - Nu.\overline{P}\right) \qquad (14)$$

Pour obtenir un jeu de puissances émises optimales, le procédé résout le système d'équations suivant :

$$\begin{cases} \dfrac{1}{Nu}.\dfrac{\partial}{\partial p_m^{(k)}}\left(\sum_{k=0}^{Nu-1} f\left(\beta_m^{(k)}, pe_m^{(k)}\right)\right) + \lambda = 0 \quad k = 0,\dots, Nu-1 \\ \sum_{k=0}^{Nu-1} pe_m^{(k)} - Nu.\overline{P} = 0 \end{cases} \qquad (15)$$

En introduisant l'estimation simplifiée du taux d'erreur bit globale BER donnée par l'équation (10) le système (15) peut s'exprimer sous la forme :

$$\begin{cases} \dfrac{-a.b.\beta_m^{(k)}}{Nu}.\exp(-b.\beta_m^{(k)}.pe_m^{(k)}) + \lambda = 0 \quad k = 0,\dots, Nu-1 \\ \sum_{k=0}^{Nu-1} pe_m^{(k)} - Nu.\overline{P} = 0 \end{cases} \qquad (16)$$

Ce qui conduit à l'expression suivante pour la puissance émise déterminée pour un symbole m et un utilisateur k :

$$pe_m^{(k)} = \left[1 + \sum_{\substack{u=0 \\ u \neq k}}^{Nu-1} \frac{\beta_m^{(k)}}{\beta_m^{(u)}}\right]^{-1}.\left(Nu.\overline{P} + \frac{1}{b}.\sum_{\substack{u=0 \\ u \neq k}}^{Nu-1} \frac{1}{\beta_m^{(u)}}.\log\left(\frac{\beta_m^{(k)}}{\beta_m^{(u)}}\right)\right) \qquad (17)$$

La figure 4 est un organigramme d'un premier mode de réalisation d'un procédé selon l'invention. Selon ce mode, la contrainte tient compte d'un niveau de priorité, en terme d'attribution de niveau de puissance, entre utilisateurs. Ce niveau de priorité vient pondérer chaque puissance $pe_m^{(k)}$ intervenant dans la somme. L'équation (13) devient :

$$\sum_{k=0}^{Nu-1} w_m^{(k)} pe_m^{(k)} = Nu \times \overline{P} \qquad\qquad (18)$$

Le niveau de priorité peut être déterminé comme appartenant à une échelle par exemple de trois niveaux :

$$w_m^{(k)} = \begin{cases} \alpha^L, & \text{L pour priorité basse} \\ \alpha^M, & \text{M pour priorité int ermédiaire} \\ \alpha^H, & \text{H pour priorité haute} \end{cases} \tag{19}$$

Dans ces conditions, l'équation (17) devient :

$$pe_m^{(k)} = \left[ \beta_m^{(k)} \times \sum_{u=0}^{Nu-1} \frac{\beta_m^{(k)}}{\beta_m^{(u)}} \right]^{-1} \times \left( Nu \times \bar{P} + \frac{1}{b} \times \sum_{u=0}^{Nu-1} \frac{w_m^{(u)}}{\beta_m^{(u)}} \times \log \left( \frac{w_m^{(u)}}{\beta_m^{(u)}} \times \frac{\beta_m^{(k)}}{w_m^{(k)}} \right) \right) \tag{20}$$

La figure 5 est un organigramme d'un deuxième mode de réalisation d'un procédé selon l'invention. Selon ce mode, le codage binaire à symbole est basé sur une modulation adaptée par utilisateur en fonction du canal. Ainsi, le procédé sélectionne le type de modulation xPSK ou xQAM selon l'indice d'utilisateurs k des bits en entrée du codage. Dans ces conditions les paramètres a, b et $N_m$ des équations (10) et (11) dépendent du type de modulation sélectionnée donc de l'utilisateur k :

$$BER_m^{(k)} \approx a^{(k)} \times \exp(-b^{(k)} \times \beta_m^{(k)} \times pe_m^{(k)}) \tag{21}$$

$$\beta_m^{(k)} = \frac{SF_f}{\left(2^{N_m^{(k)}} - 1\right)\sigma_n^2 \times \sum_{q=0}^{SF_f-1} \left|G_{q+SF_f \times m}^{(k)}\right|^2} \tag{22}$$

Dans ces conditions, l'équation (17) devient :

$$pe_m^{(k)} = \left[ \sum_{u=0}^{Nu-1} \frac{b^{(k)}}{b^{(u)}} \times \frac{\beta_m^{(k)}}{\beta_m^{(u)}} \right]^{-1} \cdot \left( Nu \times \bar{P} + \sum_{u=0}^{Nu-1} \frac{1}{b^{(u)} \times \beta_m^{(u)}} \times \log \left( \frac{a^{(k)} \times b^{(k)} \times \beta_m^{(k)}}{a^{(u)} \times b^{(u)} \times \beta_m^{(u)}} \right) \right) \tag{23}$$

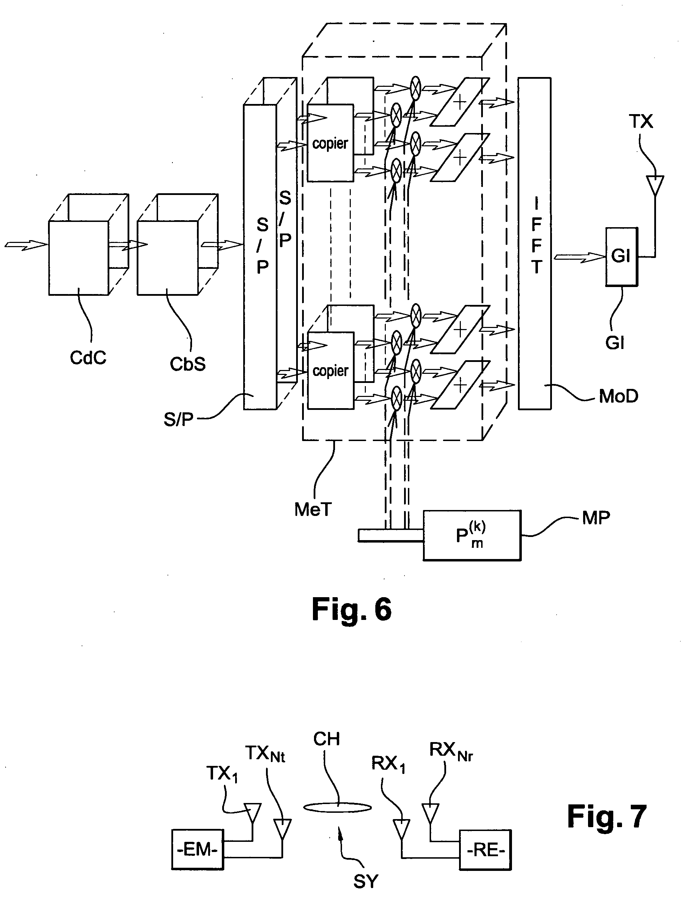

La figure 6 est un schéma d'une réalisation particulière d'un émetteur selon l'invention. L'émetteur EM comprend un codeur de canal CdC, un codeur binaire à symbole CbS, un module S/P de mise en parallèle, un module MeT d'étalement, un module MoD de modulation par Nfft fonctions orthogonales, un module MP de détermination de la puissance, un module d'insertion d'un intervalle de garde. L'émetteur est relié à une antenne d'émission TX.

Le codeur CdC de canal code les données d'information d'entrée associées à $N_u$ utilisateurs et les regroupe par trame. Ce codeur peut se décomposer en autant de codeurs que d'utilisateurs.

Le codeur CbS binaire à symbole effectue une transformation des données binaires en symboles $d^{(k)}$ au moyen d'une modulation de type par exemple xPSK ou xQAM. Ce codeur peut se décomposer en autant de codeurs que d'utilisateurs.

Le module S/P de mise en parallèle rassemble les symboles successifs en buffer de taille kxNfft/$SF_f$. Le module de mise en parallèle peut se décomposer en autant de modules que d'utilisateurs. Dans ce cas chaque module rassemble les symboles successifs en buffer de taille Nfft/$SF_f$.

Le module MeT d'étalement effectue l'étalement des symboles du buffer précédent dans les domaines temporel et fréquentiel, les symboles $x_{m,n}^{(k)}$ après étalement peuvent s'exprimer de manière condensée par la relation (1).

Le module MoD de modulation orthogonale par $N_{FFT}$ fonctions orthogonales effectue une modulation orthogonale typiquement OFDM des symboles $x_{m,n}^{(k)}$ pour générer des symboles orthogonaux.

Le module MP de détermination de la puissance calcule la puissance selon la relation (17), (20) ou (23).

Le module GI d'insertion d'un intervalle de garde insère un intervalle de garde entre les symboles orthogonaux. Le signal en sortie peut s'exprimer par la relation (3).

La figure 7 est un schéma d'un système SY de transmission selon l'invention. Le système comprend un émetteur EM selon l'invention, Nt antennes d'émission $TX_1,....,TX_{Nt}$, Nr antennes de réception $RX_1,...,RX_{Nr}$ et un récepteur RE. Les antennes d'émission et de réception sont séparées par un canal de transmission CH. L'émetteur est relié aux Nt antennes d'émission. Le récepteur est relié aux Nr antennes de réception. Le nombre Nt d'antennes d'émission et le nombre Nr d'antennes de réception sont supérieur ou égal à un. Ainsi, le système peut être un système MIMO.

La mise en oeuvre d'un procédé selon l'invention avec un tel système revient à ce que le module de détermination de la puissance détermine par antenne d'émission t un jeu de puissances selon la relation suivante :

$$pe_m^{(k)(t)} = \left[ \sum_{u=0}^{Nu-1} \frac{\beta_m^{(k)(t)}}{\beta_m^{(u)(t)}} \right]^{-1} \cdot \left( Nu.\overline{P} + \frac{1}{b} \cdot \sum_{u=0}^{Nu-1} \frac{1}{\beta_m^{(u)(t)}} \cdot \log\left( \frac{\beta_m^{(k)(t)}}{\beta_m^{(u)(t)}} \right) \right) \qquad (24)$$

Un procédé selon l'invention peut être implémenté par différents moyens. Par exemple, le procédé peut être implémenté sous forme câblée (hardware), sous forme logicielle, ou par une combinaison des deux.

Pour une implémentation câblée, le module de détermination d'un jeu de puissance utilisé pour exécuter les différentes étapes au niveau de l'émetteur peut être intégré dans un ou plusieurs circuits intégrés spécifiques (ASICs), dans des processeurs de signaux (DSPs, DSPDs), dans des circuits logiques programmables (PLDs, FPGAs), dans des contrôleurs, micro- contrôleurs, microprocesseurs, ou tout autre composant électronique conçu pour exécuter les fonctions préalablement décrites.

Pour une implémentation logicielle, quelques unes ou toutes les étapes d'un procédé d'émission selon l'invention peuvent être implémentées par des modules logiciels qui exécutent les fonctions préalablement décrites. Le code logiciel peut être stocké dans une mémoire et exécuté par un processeur. La mémoire peut faire partie du processeur ou être externe au processeur et couplée à ce dernier par des moyens connus de l'homme de l'art.

En conséquence, l'invention a aussi pour objet un programme d'ordinateur, notamment un programme d'ordinateur sur ou dans un support d'informations ou mémoire, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

## Revendications

**1.** Procédé (1) d'émission multi porteuses, du type à étalement de symboles avant modulation orthogonale selon respectivement une première dimension temporelle et une seconde dimension fréquentielle au moyen d'un code d'étalement c de longueur respective selon les deux dimensions $SF_t$ et $SF_f$, le nombre d'éléments constitutif du code déterminant un nombre maximum d'utilisateurs Numax, un nombre d'utilisateurs Nu étant déterminé inférieur ou égal à ce maximum, sur au moins une antenne d'émission, de symboles orthogonaux issus d'un module de modulation par Nfft fonctions orthogonales (MoD) déterminant Nfft sous porteuses, parmi Nc porteuses, sur lesquelles sont modulés des symboles étalés :

$$x_{p,n}^{(k)} = d_{\lfloor p/SFf \rfloor, n/SFt}^{(k)} \times c_{(p \bmod SFf),(n \bmod SFt)}^{(k)}$$

avec $d_{m,j}$ (m=0,1,..., Nc/$SF_f$-1, j=0,1,...,Nd/$SF_t$-1) les symboles,

$c_{iq}$ (1=0,1,...,$SF_f$-1, q=0,1,...,$SF_t$-1) la séquence de codes à deux dimensions,
p variant de 0 à Nc-1,
k l'indice d'utilisateurs variant de 1 à Nu,
n l'indice du symbole orthogonal variant de 0 àNd-1,
Nd le nombre de symboles orthogonaux dans une trame,
$\lfloor z \rfloor$ la partie entière de z,
représentatifs de données d'information d'entrée regroupées par trame et associées aux Nu utilisateurs, **caractérisé en ce que** ledit procédé comprend :

- une étape de détermination d'au moins un jeu de puissances $pe_m^{(k)}$ émises par une antenne par symbole d'indice m relatives respectivement à un utilisateur k, constantes sur la durée d'une trame, dont la répartition entre utilisateurs k minimise un critère d'erreur globale sous contrainte que la somme des puissances $pe_m^{(k)}$ du jeu soit égale au produit du nombre d'utilisateurs Nu et de la puissance émise par l'antenne d'émission par symbole en moyenne sur les k utilisateurs, le signal émis par l'antenne d'émission étant émis avec les puissances $pe_m^{(k)}$ déterminées par symbole d'indice m et par utilisateur k.

2. Procédé (1) d'émission multi porteuses selon la revendication précédente, dans lequel la minimisation du critère d'erreur globale est effectuée au moyen d'un algorithme à Lagrangien.

3. Procédé (1) d'émission multi porteuses selon l'une des revendications précédentes, dans lequel le critère d'erreur globale correspond à un taux d'erreur bit globale (BER).

4. Procédé (1) d'émission multi porteuses selon la revendication précédente, dans lequel le taux d'erreur bit globale est estimé par une fonction exponentielle.

5. Procédé (1) d'émission multi porteuses selon l'une des revendications 1 et 2, dans lequel le critère d'erreur globale correspond à un taux d'erreur de paquet globale (PER).

6. Procédé (1) d'émission multi porteuses selon l'une des revendications précédentes, dans lequel la contrainte tient compte d'un niveau de priorité entre utilisateurs qui vient pondérer chaque puissance $pe_m^{(k)}$ intervenant dans la somme.

7. Procédé (1) d'émission multi porteuses selon l'une des revendications précédentes, dans lequel la modulation est une modulation adaptative en fonction de l'utilisateur.

8. Procédé (1) d'émission multi porteuses selon l'une des revendications précédentes dans lequel l'émission intervient sur Nt antennes d'émission et dans lequel il y a autant de jeux de puissances déterminées que d'antennes d'émission.

9. Emetteur (EM) pour un système à Nt antennes d'émission (TX) et Nr antennes de réception (RX) séparées par un canal de transmission (CH), avec $Nt \geq 1$ et $Nr \geq 1$, du type à étalement des symboles avant modulation orthogonale selon respectivement une première dimension temporelle et une seconde dimension fréquentielle au moyen d'un code d'étalement c de longueur respective selon les deux dimensions $SF_t$ et $SF_f$, le nombre d'éléments constitutif du code déterminant un nombre maximum d'utilisateurs Numax, un nombre d'utilisateurs Nu étant déterminé inférieur ou égal à ce maximum, comprenant un module (MoD) de modulation par Nfft fonctions orthogonales déterminant Nfft sous porteuses, parmi Nc porteuses, sur lesquelles sont modulés des symboles étalés :

$$x_{p,n}^{(k)} = d_{\lfloor p/SFf \rfloor, n/SFt}^{(k)} \times c_{(p \bmod SFf),(n \bmod SFt)}^{(k)},$$

avec $d_{m,j}$ (m=0,1,..., Nc/$SF_f$-1, j=0,1,...,Nd/$SF_t$-1) les symboles,
$c_{iq}$ (i=0, 1,...,$SF_f$-1, q=0,1,...,$SF_t$-1) la séquence de codes à deux dimensions, p variant de 0 à Nc-1,
k l'indice d'utilisateurs variant de 1 à Nu,
n l'indice du symbole orthogonal variant de 0 à Nd-1,
Nd le nombre de symboles orthogonaux dans une trame,
$\lfloor z \rfloor$ la partie entière de z,

représentatifs de données d'information d'entrée regroupées par trame et associées aux Nu utilisateurs, , **caractérisé en ce qu'**il comprend en outre :

- un module de détermination d'au moins un jeu de puissances $pe_m^{(k)}$ émises par une antenne d'émission par symbole d'indice m relatives respectivement à un utilisateur k, constantes sur la durée d'une trame, dont la répartition entre utilisateurs k minimise un critère d'erreur globale sous contrainte que la somme des puissances $pe_m^{(k)}$ du jeu soit égale au produit du nombre d'utilisateurs Nu et de la puissance émise par l'antenne d'émission par symbole en moyenne sur les k utilisateurs, le signal émis par l'antenne d'émission étant émis avec les puissances $pe_m^{(k)}$ déterminées par symbole d'indice m et par utilisateur k.

10. Système (Sy) de transmission comprenant un émetteur (EM) selon la revendication précédente.

11. Programme d'ordinateur sur un support d'informations, ledit programme comportant des instructions de programme adaptées à la mise en oeuvre d'un procédé d'émission pour un système (SY) à Nt antennes d'émission (TX) et Nr antennes de réception (RX) séparées par un canal de transmission (CH), selon l'une quelconque des revendications 1 à 8, lorsque ledit programme est chargé et exécuté dans un émetteur.

12. Support d'informations comportant des instructions de programme adaptées à la mise en oeuvre d'un procédé d'émission pour un système à Nt antennes d'émission et Nr antennes de réception séparées par un canal de transmission, selon l'une quelconque des revendications 1 à 8, lorsque ledit programme est chargé et exécuté dans un émetteur.

**Claims**

1. Method (1) of multicarrier transmission, of the type employing spreading of symbols before orthogonal modulation according to respectively a first temporal dimension and a second frequency dimension by means of a spreading code c of respective length according to the two dimensions $SF_t$ and $SF_f$, the constituent number of elements of the code determining a maximum number of users Numax, a number of users Nu being determined as less than or equal to this maximum, on at least one transmit antenna, of orthogonal symbols arising from a module for modulation by Nfft orthogonal functions (MoD) determining Nfft sub-carriers, out of Nc carriers, on which spread symbols are modulated:

$$x_{p,n}^{(k)} = d_{\lfloor p/SF_f \rfloor, n/SF_t}^{(k)} \times c_{(p \bmod SF_f),(n \bmod SF_t)}^{(k)}$$

with $d_{mj}$ (m=0,1...,Nc/$SF_f$-1, j=0,1...,Nd/$SF_t$-1 the symbols,
$c_{iq}$ (i=0,1...,$SF_f$-1, q=0,1...,$SF_t$-1) the sequence of two-dimensional codes,
p varying from 0 to Nc-1,
k the index of users varying from 1 to Nu,
n the index of the orthogonal symbol varying from 0 to Nd-1,
Nd the number of orthogonal symbols in a frame,
$\lfloor z \rfloor$ the integer part of z,
representative of input information data grouped together per frame and associated with the Nu users, **characterized in that** the said method comprises:

- a step of determining at least one set of powers $pe_m^{(k)}$ which are transmitted by an antenna per symbol of index m and which relate respectively to a user k and are constant over the duration of a frame, whose distribution between users k minimizes a constrained global error criterion that the sum of the powers $pe_m^{(k)}$ of the set is equal to the product of the number of users Nu times the power transmitted by the transmit antenna per symbol on average over the k users, the signal transmitted by the transmit antenna being transmitted with the powers

$pe_m^{(k)}$ determined per symbol of index m and per user k.

2. Method (1) of multicarrier transmission according to the preceding claim, in which the minimization of the global error criterion is performed by means of a Lagrangian-based algorithm.

3. Method (1) of multicarrier transmission according to one of the preceding claims, in which the global error criterion corresponds to a global bit error rate (BER).

4. Method (1) of multicarrier transmission according to the preceding claim, in which the global bit error rate is estimated by an exponential function.

5. Method (1) of multicarrier transmission according to either of Claims 1 and 2, in which the global error criterion corresponds to a global packet error rate (PER).

6. Method (1) of multicarrier transmission according to one of the preceding claims, in which the constraint takes account of a priority level between users which weights each power $pe_m^{(k)}$ occurring in the sum.

7. Method (1) of multicarrier transmission according to one of the preceding claims, in which the modulation is a user-dependent adaptive modulation.

8. Method (1) of multicarrier transmission according to one of the preceding claims in which the transmission occurs on Nt transmit antennas and in which there are as many sets of determined powers as transmit antennas.

9. Transmitter (EM) for a system with Nt transmit antennas (TX) and Nr receive antennas (RX) separated by a transmission channel (CH), with Nt $\geq$ 1 and Nr $\geq$ 1, of the type employing spreading of symbols before orthogonal modulation according to respectively a first temporal dimension and a second frequency dimension by means of a spreading code c of respective length according to the two dimensions $SF_t$ and $SF_f$, the constituent number of elements of the code determining a maximum number of users Numax, a number of users Nu being determined as less than or equal to this maximum, comprising a module (MoD) for modulation by Nfft orthogonal functions determining Nfft sub-carriers, out of Nc carriers, on which spread symbols are modulated:

$$x_{p.n}^{(k)} = d_{\lfloor p/SFf \rfloor, n/SFt}^{(k)} \times c_{(p \bmod SFf).(n \bmod SFt)}^{(k)}$$

with $d_{mj}$ (m=0,1...,Nc/$SF_f$-1, j=0,1...,Nd/$SF_t$-1) the symbols,
$c_{iq}$ (i=0,1...,$SF_f$-1, q=0,1...,$SF_t$-1) the sequence of two-dimensional codes,
p varying from 0 to Nc-1,
k the index of users varying from 1 to Nu,
n the index of the orthogonal symbol varying from 0 to Nd-1,
Nd the number of orthogonal symbols in a frame,
$\lfloor z \rfloor$ the integer part of z,
representative of input information data grouped together per frame and associated with the Nu users, **characterized in that** it furthermore comprises:

- a module for determining at least one set of powers $pe_m^{(k)}$ which are transmitted by a transmit antenna per symbol of index m and which relate respectively to a user k and are constant over the duration of a frame, whose distribution between users k minimizes a constrained global error criterion that the sum of the powers $pe_m^{(k)}$ of the set is equal to the product of the number of users Nu times the power transmitted by the transmit antenna per symbol on average over the k users, the signal transmitted by the transmit antenna being transmitted with the powers $pe_m^{(k)}$ determined per symbol of index m and per user k.

**10.** Transmission system (Sy) comprising a transmitter (EM) according to the preceding claim.

**11.** Computer program on an information medium, the said program comprising program instructions adapted for the implementation of a transmission method for a system (SY) with Nt transmit antennas (TX) and Nr receive antennas (RX) separated by a transmission channel (CH), according to any one of Claims 1 to 8, when the said program is loaded and executed in a transmitter.

**12.** Information medium comprising program instructions adapted for the implementation of a transmission method for a system with Nt transmit antennas and Nr receive antennas separated by a transmission channel, according to any one of Claims 1 to 8, when the said program is loaded and executed in a transmitter.

**Patentansprüche**

**1.** Mehrträger-Sendeverfahren (1) von der Art mit Spreizung von Symbolen vor orthogonaler Modulation gemäß einer ersten Zeitdimension bzw. einer zweiten Frequenzdimension mittels eines Spreizcodes c einer Länge gemäß den zwei Dimensionen $SF_t$ bzw. $SF_f$, wobei die Anzahl von den Code bildenden Elementen eine maximale Anzahl von Benutzern Numax bestimmt, wobei eine Anzahl von Benutzern Nu als geringer als das oder gleich diesem Maximum bestimmt wird, auf mindestens einer Sendeantenne, von orthogonalen Symbolen, die von einem Modul der Modulation durch Nfft orthogonale Funktionen (MoD) stammen, die Nfft Subträger unter Nc Trägern bestimmen, auf die gespreizte Symbole moduliert werden:

$$x_{p,n}^{(k)} = d_{\lfloor p/SF_f \rfloor, n/SF_t}^{(k)} \times c_{(p \bmod SF_f),(n \bmod SF_t)}^{(k)}$$

mit $d_{mj}$ (m=0, 1, ..., $Nc/SF_f$-1, j=0, 1, ..., $Nd/SF_t$-1) die Symbole,
$c_{iq}$ (i=0, 1, ..., $SF_f$-1, q=0, 1, ..., $SF_t$-1) die Sequenz von zweidimensionalen Codes,
p von 0 bis Nc-1 variierend,
k der Index von Benutzern, der von 1 bis Nu variiert,
n der Index des orthogonalen Symbols, der von 0 bis Nd-1 variiert,
Nd die Anzahl von orthogonalen Symbolen in einem Rahmen,
$\lfloor z \rfloor$ der Ganzteil von z,
die für Eingangsinformationsdaten repräsentativ sind, die in Rahmen zusammengefasst und den Nu Benutzern zugewiesen sind, **dadurch gekennzeichnet, dass** das Verfahren enthält:

- einen Schritt der Bestimmung mindestens eines Satzes von von einer Antenne pro Symbol mit dem Index m gesendeten Leistungen $pe_m^{(k)}$, die sich je auf einen Benutzers k beziehen, über die Dauer eines Rahmens konstant sind, deren Verteilung zwischen Benutzern k ein globales Fehlerkriterium unter der Voraussetzung minimiert, dass die Summe der Leistungen $pe_m^{(k)}$ des Satzes gleich dem Produkt aus der Anzahl von Benutzern Nu und der von der Sendeantenne pro Symbol im Mittel an die k Benutzer gesendeten Leistung ist, wobei das von der Sendeantenne gesendete Signal mit den Leistungen $pe_m^{(k)}$ gesendet wird, die pro Symbol mit dem Index m und pro Benutzer k bestimmt sind.

**2.** Mehrträger-Sendeverfahren (1) nach dem vorhergehenden Anspruch, bei dem die Minimierung des globalen Fehlerkriteriums mittels eines Lagrange-Algorithmus durchgeführt wird.

**3.** Mehrträger-Sendeverfahren (1) nach einem der vorhergehenden Ansprüche, bei dem das globale Fehlerkriterium einer globalen Bitfehlerrate (BER) entspricht.

**4.** Mehrträger-Sendeverfahren (1) nach dem vorhergehenden Anspruch, bei dem die globale Bitfehlerrate durch eine Exponentialfunktion geschätzt wird.

**5.** Mehrträger-Sendeverfahren (1) nach einem der Ansprüche 1 und 2, bei dem das globale Fehlerkriterium einer globalen Paketfehlerrate (PER) entspricht.

6. Mehrträger-Sendeverfahren (1) nach einem der vorhergehenden Ansprüche, bei dem die Voraussetzung eine Prioritätsebene zwischen Benutzern berücksichtigt, die jede Leistung $pe_m^{(k)}$ gewichtet, die in der Summe vorkommt.

7. Mehrträger-Sendeverfahren (1) nach einem der vorhergehenden Ansprüche, bei dem die Modulation eine in Abhängigkeit vom Benutzer adaptive Modulation ist.

8. Mehrträger-Sendeverfahren (1) nach einem der vorhergehenden Ansprüche, bei dem die Aussendung auf Nt Sendeantennen erfolgt, und bei dem es ebenso viele Sätze von bestimmten Leistungen gibt wie Sendeantennen.

9. Sender (EM) für ein System mit Nt Sendeantennen (TX) und Nr Empfangsantennen (RX), die durch einen Übertragungskanal (CH) getrennt werden, mit Nt ≥ 1 und Nr ≥ 1, von der Art mit Spreizung der Symbole vor orthogonaler Modulation gemäß einer ersten Zeitdimension bzw. einer zweiten Frequenzdimension mittels eines Spreizcodes c einer Länge gemäß den zwei Dimensionen $SF_t$ bzw. $SF_f$, wobei die Anzahl von den Code bildenden Elementen eine maximale Anzahl von Benutzern Numax bestimmt, wobei eine Anzahl von Benutzern Nu als geringer als das oder gleich diesem Maximum bestimmt wird, der ein Modul (MoD) der Modulation durch Nfft orthogonale Funktionen enthält, die Nfft Subträger unter Nc Trägern bestimmt, auf die gespreizte Symbole moduliert werden:

$$x_{p,n}^{(k)} = d_{\lfloor p/SF_f \rfloor, \lfloor n/SF_t \rfloor}^{(k)} \times c_{(p \bmod SF_f),(n \bmod SF_t)}^{(k)} \, ,$$

mit $d_{mj}$(m=0, 1, ..., Nc/$SF_f$-1, j=0, 1, ..., Nd/$SF_t$-1) die Symbole,
$c_{iq}$(i=0, 1, ..., SF-1, q=0, 1, ..., $SF_t$-1) die Sequenz von zweidimensionalen Codes,
p von 0 bis Nc-1 variierend,
k der Index von Benutzern, der von 1 bis Nu variiert,
n der Index des orthogonalen Symbols, der von 0 bis Nd-1 variiert,
Nd die Anzahl von orthogonalen Symbolen in einem Rahmen,
⌊z⌋ der Ganzteil von z,
die für Eingangsinformationsdaten repräsentativ sind, die in Rahmen zusammengefasst und den Nu Benutzern zugewiesen sind, **dadurch gekennzeichnet, dass** er außerdem enthält:

- ein Bestimmungsmodul mindestens eines Satzes von von einer Sendeantenne pro Symbol mit dem Index m gesendeten Leistungen $pe_m^{(k)}$, die sich je auf einen Benutzer k beziehen, über die Dauer eines Rahmens konstant sind, deren Verteilung zwischen Benutzern k ein globales Fehlerkriterium unter der Voraussetzung minimiert, dass die Summe der Leistungen $pe_m^{(k)}$ des Satzes gleich dem Produkt aus der Anzahl von Benutzern Nu und der von der Sendeantenne pro Symbol im Mittel an die k Benutzer gesendeten Leistung ist, wobei das von der Sendeantenne gesendete Signal mit den Leistungen $pe_m^{(k)}$ gesendet wird, die pro Symbol mit dem Index m und pro Benutzer k bestimmt sind.

10. Übertragungssystem (Sy), das einen Sender (EM) nach dem vorhergehenden Anspruch enthält.

11. Computerprogramm auf einem Datenträger, wobei das Programm Programmanweisungen enthält, die zur Durchführung eines Sendeverfahrens für ein System (SY) mit Nt Sendeantennen (TX) und Nr Empfangsantennen (RX) geeignet sind, die durch einen Übertragungskanal (CH) getrennt werden, nach einem der Ansprüche 1 bis 8, wenn das Programm in einen Sender geladen und in ihm ausgeführt wird.

12. Datenträger, der Programmanweisungen enthält, die zur Durchführung eines Sendeverfahrens für ein System mit Nt Sendeantennen und Nr Empfangsantennen geeignet ist, die durch einen Übertragungskanal getrennt werden, gemäß einem der Ansprüche 1 bis 8, wenn das Programm in einen Sender geladen und in ihm ausgeführt wird.

Fig. 1

Fig. 2

**Fig. 3**

**Fig. 4**

**Fig. 5**

**Fig. 6**

**Fig. 7**